# EUROPÄISCHE PATENTSCHRIFT

(11) **EP 0 773 399 B1**
(45) Veröffentlichungstag und Bekanntmachung des Hinweises auf die Patenterteilung: **06.05.1998**
(21) Anmeldenummer: 96115773.2
(22) Anmeldetag: 02.10.1996
(51) Int. Cl.: F16L 55/033

(54) **Rohr oder Rohrteil aus thermoplastischem Werkstoff**
Pipe or pipe part made of thermoplastic material
Tuyau ou section de tuyau en matériau thermoplastique

(30) Priorität: 07.11.1995 DE 19541414
(43) Veröffentlichungstag der Anmeldung: 14.05.1997
(73) Patentinhaber: REHAU AG + Co, 95111 Rehau (DE)
(72) Erfinder: Heinrich, Gerhard, c/o Rehau AG + Co, 95111 Rehau (DE); Taupitz, Andreas, c/o Rehau AG + Co, 95111 Rehau (DE)

(56) Entgegenhaltungen:
- DE-U- 8 718 020

## Beschreibung

Die Erfindung betrifft extrudierte, spritzgegossene oder blasgeformte Rohre oder Rohrteile aus thermoplastischem Werkstoff zum Fördern von Flüssigkeiten in Abwasserrohrsystemen, wobei die Innenseite des Rohres oder Rohrteils mit der Flüssigkeit in Berührung kommt.

Insbesondere beim Bau von Ein- oder Mehrfamilienhäusern, von Krankenhäusern und Altersheimen und ähnlichen Bauwerken spielt der Schallschutz eine zunehmend wichtige Rolle. Eine der wichtigsten Schallquellen stellen die Sanitäreinrichtungen dar, die gleichzeitig zur Schallausbreitung in Gebäuden einen wesentlichen Beitrag leisten. Hierbei spielen die sog. Hausabflußrohre eine große Rolle, die das Abwasser von den einzelnen Verbrauchsstellen ableiten und dem Hausanschlußkanal zur Wasserabführung zuführen.

Zum Stand der Technik zählen hier einerseits relativ dünnwandige Rohre aus nicht oder nur gering gefüllten thermoplastischen Werkstoffen wie Polyvinylchlorid, Polypropylen oder Polyethylen. die ungenügende Schalldämmeigenschaften aufweisen. Andererseits kommen auch wesentlich dickwandigere Rohre aus Metallguß, aus mineralgefülltem Polypropylen oder als mehrschichtiges Polymer-Rohr hier zum Einsatz, deren Metergewicht um ein Vielfaches über dem der o.g. dünnwandigen Rohre liegt.

Ein gattungsgemäßes Hausabflußrohr ist aus der europäischen Patentanmeldung 0 386 517 A1 bekannt. Dieses Hausabflußrohr besteht bevorzugt aus Polyvinylchlorid oder Polyethylen. Zur Verbesserung der Schallschutzanforderungen besteht das beschriebene Hausabflußrohr aus einem Innenrohr und einem dieses Innenrohr umgebenden Außenmantel. Die Dichte des Außenmantels ist dabei größer gewählt als die Dichte des Innenrohres. Gegenüber den bekannten einschaligen Kunststoffrohren erbringt dieses bekannte Mehrschichtenrohr eine erheblich reduzierte Schalleitung und Schallübertragung, wobei der Außenmantel als Schallschutzmantel dient, in welchem Körper- und Mediumschall gedämpft werden. Die im Inneren des Hausabflußrohres vorhandenen oder beispielsweise an Aufprallstellen oder Krümmungen entstehenden Schallwellen werden dabei am Außenmantel gebrochen und/oder reflektiert und dringen somit in einem nicht unerheblichen Maße reduziert nach außen. Nachteilig an dieser Lösung des Problems ist die Tatsache, daß hier mit zwei verschiedenen Materialien ein mehrschichtiges Rohr hergestellt werden muß. Dieser Herstellungsvorgang ist aufwendig und auch die Verbindung zweier Rohre untereinander erfordert einen erheblich höheren Aufwand als die Verbindung einer Rohrleitung mit einschichtigen Rohren. Darüber hinaus ist das Recycling dieser Verbundrohre nicht oder nur mit erhöhtem Aufwand möglich.

Aus der europäischen Patentanmeldung 0 342 181 ist ferner ein Kunststoffrohr bzw. Rohrformstück bekannt, welches ebenfalls mit einem mehrschichtigen Rohrkörper ausgestattet ist. Zur Verbesserung der Schalldämmung besitzt dieser Rohrkörper ein Mantelrohr und ein Mediumrohr, welche vorzugsweise mit unterschiedlichen Biegesteifigkeiten ausgestattet sind. Zwischen Mantelrohr und Mediumrohr ist eine Zwischenschicht eingeschlossen, die ggf. eine oder mehrere Zwischenlagen aufweist. Zwar ist die gewünschte Schalldämmung auch mit einem solchen Mehrschichtenrohr zu erzielen, der Aufwand zur Herstellung ist jedoch erheblich und steigt noch gegenüber dem Zweischichtenrohr aus der europäischen Anmeldung 0 386 517. Auch dieses Zweischichtenrohr bedingt die geschilderten Schwierigkeiten beim Recycling.

Schließlich ist aus dem deutschen Gebrauchsmuster 87 18 020.0 U1 ein Kunststoffrohr bekannt, welches auf die Mehrschichtigkeit verzichtet und gleichzeitig die Schalldämmung optimieren will. Erreicht werden soll dieses Ziel mit einem in den Kunststoff eingearbeiteten Füllstoff höherer Dichte. Durch diesen Füllstoff erhält das extrudierte oder spritzgußgeformte Kunststoffrohrteil eine Dichte von 1,4 bis 2,7 g/cm³ und ein Gewicht je Flächeneinheit von mindestens 8 kg/m³. Aus diesen Angaben resultiert z.B. bei einem Rohr DN 125 ein Metergewicht von ca. 4,3 kg, bei einem Rohr DN 70 von immerhin noch mehr als 2 kg.

Dieses hohe Gewicht der Rohre bzw. Rohrteile erschwert den Transport und die Handhabung, insbesondere bei schwer zugänglichen Einbausituationen.

Als weiterer Nachteil dieses bekannten Rohres oder Rohrteils ist festzustellen, daß zur Erzielung des Flächengewichtes von mindestens 8 kg/m² vergleichsweise große Wanddicken erforderlich sind. Bei den im Handel erhältlichen in Übereinstimmung mit diesem Gebrauchsmuster hergestellten Rohren werden Rohrstücke DN 100 z.B. mit 5,3 mm Wandstärke ausgeführt. Dies führt zu einem hohen Verbrauch an Grundmatrix und Zuschlagstoffen und damit zu erhöhten Materialkosten. Darüber hinaus sind die für dünnwandigere Hausabflußrohre üblichen Bearbeitungsgeräte wie Abschneider und dergleichen bei dieser erhöhten Wanddicke nicht mehr oder nur mit unverhältnismäßig hohem Aufwand verwendbar.

Um auch die bei erhöhter Wandstärke zur Gewährleistung des benötigten hydraulischen Querschnitts nötigen Innendurchmesser zu erhalten, müssen zumindest bei einigen Abmessungen die Außendurchmesser vergrößert werden. Bei den o.g. im Handel erhältlichen Rohren beträgt diese Außendurchmessererhöhung bei z.B. DN 70 4 %, bei z.B. DN 125 sogar 8 %. Insbesondere bei den vermehrt durchgeführten Vorwandinstallationen, bei denen die Rohrleitungsführung aufgrund der räumlich beengten Verhältnisse ohnehin problematisch ist, ist dieser erhöhte Außendurchmesser äußerst nachteilig. Hinzu kommt als weiterer Nachteil eine aufwendigere Technik zum Anformen von Verbindungselementen wie Muffen mit Sicken an extrudierte Rohrteile.

Als weiterer Nachteil ist herauszustellen, daß bei der Werkstoffauslegung nach der DE 87 18 020.0 U1 die Rohre und Rohrformteile so hoch mit mineralischem Füllstoff gefüllt werden, daß eine zusätzliche Flammschutzausrüstung problematisch ist. Dementsprechend sind die bisher im Handel befindlichen Rohre und Rohrformteile auch nur nach Brandschutzklasse B2 der DIN 4102 klassifiziert.

Hier setzt die Erfindung ein, die es sich zur Aufgabe gestellt hat, die Nachteile des bekannten Standes des Technik zu vermeiden und insbesondere ein einschichtiges, schallgedämmtes Hausabflußrohr und dafür verwendbare Rohrformteile anzugeben, welches bzw. welche bei optimaler Schalldämmung im Wanddickenbereich ungedämmter Hausabflußrohre hergestellt werden können.

Ansatzpunkt war dabei das Infragestellen des in der Literatur durchgängig beschriebenen Vorurteils, daß die Schalldämmung zwangsläufig mit zunehmender Masse aller an der Schalldämmung beteiligten Bauelemente zunimmt bzw. daß dies vorbehaltlos auf die erfindungsgemäß betrachteten Systeme übertragen werden kann.

Dieses Vorurteil wurde z.B. veröffentlicht in DE 87 18 020.0 U1, wobei zusätzlich angegeben ist, daß das Schallniveau logarithmisch reziprok mit dem "Flächengewicht" abnimmt.

Auch in der Fachzeitschrift "Technique de l'lngenieur (Construction)", Ausgabe Dezember 1972, wurden auf den Seiten C-1115-1 et C-1115-2 Meßergebnisse veröffentlicht, die diesen logarithmischen Zusammenhang aufzeigen.

In der Publication "Noise Abatement" C. Duerden, Butterworths, London 1970, wurde auf den Seiten 30-31 zumindest ein annähernd logarithmischer Zusammenhang aufgezeigt.

Und bereits 1961 wurde in "L'Acoustique des Batiments" von R. Lehmann auf den Seiten 28-31 die annähernd reziprok logarithmische Abhängigkeit zwischen Flächengewicht und Schalldämmung für Frequenzbereiche zwischen 125 und 4.000 Hz nachgewiesen.

Der erfindungsgemäßen Weiterentwicklung des Standes der Technik auf Grundlage der geschilderten Vorurteile lag der Ansatz zugrunde, daß der reziprok logarithmische Zusammenhang zwischen (Flächen-) Gewicht und Schalldämmung für die zur Schallausbreitung in Bauwerken maßgeblichen Zusammenhänge nicht ungeprüft übertragen werden dürfen. Dabei wurde insbesondere davon ausgegangen, daß die den eigentlich störenden Luftschall verursachenden Bauelemente primär nicht die Hausabflußrohre, sondern die Wände und Decken der beschallten Räume darstellen. Diese Decken und Wände werden ihrerseits direkt oder indirekt von den in Schwingung geratenen Rohrteilen der Hausabflußanlage zum Schwingen angeregt. Ausgehend von der Überlegung, daß eine erhöhte Rohrteilmasse auch dahingehend wirken kann, daß bei gegebener Oszillation dieser Rohrteile die auf die anschließenden Decken und Wänden übertragbare Oszillationsenergie ebefalls erhöht wird, wurde das für die Schallrezeption der Bewohner bedeutsame Gesamtsystem eingehender Untersuchungen unterzogen.

Als Ergebnis dieser Untersuchungen werden erfindungsgemäß Rohre oder Rohrformteiie aus Polyolefinen oder Styrolpolymerisaten vorgeschlagen, die sich dadurch von dem hier geschilderten Stand der Technik unterscheiden, daß deren Wandicke dabei höchstens dem Zweiunddreißigstel des Außendurchmessers der Rohre oder Rohrformteile entspricht und deren Metergewicht 3 kg nicht überschreitet.

Wesentliches Merkmal gegenüber dem Stand der Technik ist die Maßangabe, nach der das Verhältnis von Außendurchmesser zur Wanddicke (üblicherweise abgekürzt mit "SDR") mindestens 32:1 ist. Auf diese Weise können relativ dünnwandige Rohre hergestellt werden, die bei Verwendung der erfindungsgemäßen Zuschlagstoffe hervorragende Schalldämmeigenschaften mit Vorteilen bei der Handhabbarkeit und Verarbeitbarkeit aufweisen. Um die Handhabbarkeit weiter zu verbessern, kann eine Beschränkung des Metergewichts auf 2.5 kg nützlich sein.

Erfindungsgemäße Rohre oder Rohrformteile sind typischerweise durch folgende Eigenschaften gekennzeichnet:

| | SDR | Metergewicht | Wandstärke |
|---|---|---|---|
| DN 70 | 33 | 0.7-1.1kg | 1.9-2.3mm |
| DN 100 | 35 | 1.5-2.2kg | 2.7-3.2mm |
| DN 125 | 35 | 1.8-2.8kg | 3.1-3.6mm |

Zum Erreichen optimaler Schalldämmeigenschaften erscheint es als vorteilhaft, Zuschlagsstoffe mit einer mittleren Korngröße von weniger als 1 µ bzw mit einem Anteil von weniger als 30% der Teilchen mit einer Korngröße von mehr als 1 µ zu verwenden. Hierbei hat sich als Zuschlagsstoff insbesondere eine Mischung aus Zinksulfid und Bariumsulfat als im Sinne der erfindungsgemäßen Weiterentwicklung vorteilhaft herausgestellt. Bei einem Zusatz von z.B. 66 % dieses Zuschlagsstoffes stellt sich eine Rohr- bzw. Rohrteildichte von 1,9 g/cm³ ein. Durch das der Erfindung zugrunde liegenden Wanddicken-Durchmesser-Verhältnisses ergibt sich gegenüber dem Stand der Technik vorteilhafterweise ein erheblich reduziertes Flächengewicht, z.B. bei DN 100 5,1 kg/m² gegenüber beim Stand der Technik 9,8 kg/m². Ähnliche Verhältnisse ergeben sich bei anderen Rohrnennweiten.

Mit der erfindungsgemäßen Mischung von Ausgangspolymeren und Zuschlagsstoffen lassen sich relativ dünnwandige Rohre und Rohrteile herstellen, mit deren Hilfe sich Rohrsysteme herstellen lassen, deren Schallschutzwirkung gegenüber dem des Standes der Technik wesentlich verbessert ist. So konnte beispielsweise die Schallschutzwirkung gegenüber der in der DE 87 18 020.0 U1 beschriebenen Lösung durchschnittlich um 4 dB erhöht werden. Die dem Stand der Technik zugrunde liegenden Vorurteile hätten eine Verringerung der Schallschutzwirkung erwarten lassen, da die dort beschriebenen Rohre wesentlich dickwandiger sind als die nach der Erfindung hergestellten. Diese Ergebnisse bestätigen jedoch vollauf den der erfindungsgemäßen Weiterentwicklung zugrunde liegenden Ansatz.

Weiterhin ist aufgrund der geringeren Wanddicke - z.B. wird bei einem Rohr oder Rohrformteil DN 100 nur eine Wanddicke von ca. 2,7 mm benötigt - eine deutliche Verbesserung bei der Verarbeitbarkeit zu erzielen. Aufgrund der erfindungsgemäß reduzierten Kenngrößen Wanddicke und Metergewicht werden außerdem Transport und Handhabbarkeit entscheidend verbessert. Als wesentlichen zusätzlichen Vorteil bringt noch die Verwendung von Zinksulfid als Bestandteil des erfindungsgemäßen Zuschlagsstoffes als Weißpigment gemäß DIN 55910 eine Weißfärbung und gleichzeitig eine UV-Stabilisierung der damit ausgestatteten Rohre und Rohrformteile. Dafür verantwortlich ist das relative Aufhellvermögen von Zinksulfid von 22-24 nach DIN 53775 sowie die hohe Brechungszahl von über 2. Dadurch ergeben sich eindeutig Vorteile bei der Offenverlegung von Hausabflußrohren z.B. in Kellern, bei der Lagerhaltung auf Freiflächen und ggf. beim Außenverlegen von Hausabflußleitungen. Da das Zinksulfid in dem erfindungsgemäßen Zuschlagsstoff eine Weißfärbung der damit ausgestatteten Rohre und Rohrformteile bewirkt, entfällt damit auch beispielsweise ein Weißtünchen dieser Rohre bei der Offenverlegung in Kellerräumen und dergleichen.
Auch wirkt das Zinksulfid selbst als Synergist für halogenierte Flammschutzsysteme und kann damit die aus arbeitshygienischer Sicht bedenkliche Flammschutzkomponente Antimontrioxyd zumindest teilweise ersetzen.

Damit wird von den erfindungsgemäß ausgestatteten Rohren und Rohrformteilen vergleichsweise einfach die Brandschutzklasse B1 nach DIN 4102 erreicht. In bestimmten Anwendungsfällen kann es sich als vorteilhaft erweisen, daß das Verhältnis von Außendurchmesser zur Wanddicke bei den erfindungsgemäßen Rohren und Rohrformteilen zwischen 35:1 und 42:1 liegt. Diese Verhältniszahlen sind insbesondere bei größeren Rohrabmessungen empfehlenswert.

Zum Erreichen der optimalen Schalldämmeigenschaften und einer einheitlich wirkenden Weißfärbung scheint es ferner als zweckmäßig, daß die Siebkurve des Zuschlagstoffes nicht mehr als 30 % Teilchen einer Korngrößer > 1 µ aufweist.

Diese Vorschrift ist auch hilfreich für das Erreichen einer glatten Oberfläche, die im Bedarfsfall auch durch eine z.B. koextrudierte, dünne Beschichtung ausgeführt sein kann.

Der Zuschlagstoff selbst weist vorteilhaft ein relatives Aufhellvermögen von mehr als 22 bei einer Brechungszahl von mindestens 2 auf. Auch diese Größenordnungen dienen dem einheitlich weißen Aussehen der so behandelten Rohre und Rohrformteile.

## Patentansprüche

1. Extrudiertes, spritzgußgeformtes oder blasgeformtes Rohr oder Rohrformteil aus einem Polyolefin oder einem Styrolpolymerisat zum Befördern von Flüssigkeiten in Abwasserrohrsystemen, wobei das Rohr oder Rohrformteil durch Einarbeiten eines geeigneten Zuschlagstoffes eine Dichte von 1,4 bis 2,7 g/cm³ aufweist, dadurch gekennzeichnet, daß die Wanddicke der Rohre und Rohrformteile höchstens dem Zweiunddreißigstel ihres Außendurchmessers entspricht und daß deren Metergewicht 3 kg nicht übersteigt.

2. Rohr oder Rohrformteil nach Anspruch 1, dadurch gekennzeichnet, daß der Zuschlagstoff eine mittlere Korngröße von < 1 µ besitzt.

3. Rohr oder Rohrformteil nach Anspruch 1, dadurch gekennzeichnet, daß der Zuschlagstoff ein Gemisch aus Zinksulfid und Bariumsulfat und anderen wirksamen Additiven ist.

4. Rohr oder Rohrformteil nach Anspruch 1, dadurch gekennzeichnet, daß das Verhältnis von Außendurchmesser zu Wanddicke zwischen 35:1 und 42:1 liegt.

5. Rohr oder Rohrformteil nach Anspruch 2, dadurch gekennzeichnet, daß die Siebkurve des Zuschlagstoffes nicht mehr als 30 % Teilchen mit einer Korngröße von > 1 µ aufweist.

6. Rohr oder Rohrformteil nach Anspruch 1, dadurch gekennzeichnet, daß der Zuschlagstoff ein relatives Aufhellvermögen nach DIN 53775 von mehr als 22 aufweist.

7. Rohr oder Rohrformteil nach Anspruch 1, dadurch gekennzeichnet, daß der Zuschlagstoff eine Brechungszahl von mindestens 2 aufweist.

8. Rohr oder Rohrformteil nach Anspruch 1 oder 2, dadurch gekennzeichnet, daß das Metergewicht 2.5 kg nicht übersteigt.

## Claims

1. Extruded, injection moulded or blow moulded pipe or pipe fitting made of a polyolefine or styrene polymeride and designed to convey fluids in waste water systems, the pipe or pipe fitting having a density of between 1.4 and 2.7 g/cm³ due to the incorporation in the material of a suitable additive, characterised in that the wall thickness of the pipe and pipe fittings is no more than one thirty-secondth of their outer diameter and in that the weight per metre is no more than 3 kg.

2. Pipe or pipe fitting according to Claim 1, characterised in that the additive has an average grain size of < 1 µ.

3. Pipe or pipe fitting according to Claim 1, characterised in that the additive is a mixture of zinc sulphide, barium sulphate and other active constituents.

4. Pipe or pipe fitting according to Claim 1, characterised in that the ratio of the outer diameter to the wall thickness is between 35:1 and 42:1.

5. Pipe or pipe fitting according to Claim 2, characterised in that the additive has a grading scale in which no more than 30% of particles have a grain size of > 1 µ.

6. Pipe or pipe fitting according to Claim 1, characterised in that the relative whitening capacity of the additive according to DIN 53775 is greater than 22.

7. Pipe or pipe fitting according to Claim 1, characterised in that the additive has a refractive index of at least 2.

8. Pipe or pipe fitting according to Claim 1 or 2, characterised in that the weight per metre is no greater than 2.5 kg.

## Revendications

1. Tube ou raccord extrudé, injecté ou soufflé en polyoléfine ou polymérisat styrénique pour le transport de liquides en conduites d'assainissement, le tube ou raccord présentant, grâce à l'ajout d'un adjuvant adapté, une masse volumique de 1,4 à 2,7 g/cm³, caractérisé en ce que les épaisseurs de paroi des tubes et des raccords soient égales au maximum au 32ème de leur diamètre extérieur et en ce que le poids au mètre ne dépasse pas 3 kg.

2. Tube ou raccord selon la revendication 1, caractérisé en ce que l'adjuvant a une grosseur de grain < 1 µ.

3. Tube ou raccord selon la revendication 1, caractérisé en ce que l'adjuvant est un mélange de sulfure de zinc, de sulfate de barium et d'autres additifs actifs.

4. Tube ou raccord selon la revendication 1, caractérisé en ce que le rapport diamètre extérieur/épaisseur de paroi se situe entre 35:1 et 42:1.

5. Tube ou raccord selon la revendication 2, caractérisé en ce que la courbe granulométrique de l'adjuvant ne présente pas plus de 30 % de particules ayant une grosseur de grain > 1 µ.

6. Tube ou raccord selon la revendication 1, caractérisé en ce que l'adjuvant présente une capacité d'éclaircissage supérieure à 22 selon DIN 53775.

7. Tube ou raccord selon la revendication 1, caractérisé en ce que l'adjuvant présente un indice de réfraction de 2 minimum.

8. Tube ou raccord selon la revendication 1 ou 2, caractérisé en ce que le poids au mètre ne dépasse pas 2,5 kg.
